# EUROPEAN PATENT APPLICATION

(11) **EP 2 860 287 A1**
(43) Date of publication of application: **15.04.2015**
(21) Application number: 13188212.8
(22) Date of filing: 11.10.2013
(51) Int. Cl.: C25B 1/24, C25B 1/26, C25B 9/08

(54) **Improved electrolytic cell**

(71) Applicant: Solvay SA, 1120 Bruxelles (BE)
(72) Inventor: The designation of the inventor has not yet been filed
(74) Representative: Mross, Stefan P.M.

(57) **Abstract**

An improved electrolytic cell and a process for the manufacture of halogens, especially of F₂, using this cell is described which cell comprises at least one diaphragm or at least one membrane, preferably a diaphragm, between the cathode compartment and the anode compartment. The cell provides improved current efficiency and improved energy efficiency because the distance between cathode parts and anode can be decreased compared to conventional electrolytic cells, and the recombination of H₂ and F₂ is prevented.

## Description

The present invention concerns an improved electrolytic cell for the manufacture of halogens, especially for the manufacture of elemental fluorine (F₂) from an electrolyte comprising KF and HF, having a diaphragm or a membrane between the anode and cathode compartments.

In the manufacture of semiconductors, photovoltaic cells, thin film transistor (TFT) liquid crystal displays, and micro-electromechanical systems (MEMS), F₂ can be applied as etching gas, or as a chamber cleaning gas. It may be applied undiluted, i.e. in a concentration of 100%, but often, it is applied diluted by inert gases, for example in concentrations from 1 to 50 % by volume in mixtures, for example, with oxygen, nitrogen and/or argon.

Processes of this kind are described in WO 2007/116033 (which describes the use of fluorine and certain mixtures as an etchant and chamber cleaning agent), WO 2009/080615 (which describes the manufacture of MEMS), WO 2009/092453 (which describes the manufacture of solar cells), and in unpublished WO patent application PCT/EP2010/066109 which concerns the manufacture of TFTs. F₂ used for etching or chamber cleaning is often produced on site by electrolysis of HF in the presence of conducting salts, especially, as mentioned above, in the presence of KF which forms adducts with HF.

A molten HF adduct of KF having the formula KF·(1.8-2.3)HF, is the preferred electrolyte salt. F₂ is electrolytically formed from the HF according to the equation (I) by applying a voltage and passing electric current through the molten salt :

2 HF → F₂ + H₂ (I)

Practically, in cells according to the state of the art, the voltage is often kept in a range of 9 to 11 Volts. The skilled person is well aware that the voltage is in relation e.g. to the amperage, electrolyte composition and temperature. HF is fed into the reactor containing the molten electrolyte salt continuously or intermittently to supply HF.

Electrolytic cells, especially those for F₂ manufacture, are designed according to two basic principles.

Electrolysis may be performed in a cell comprising a vessel which contains the electrolyte and serves as cathode. The cell further comprises at least one anode which extends into the molten electrolyte. Often, 2 or more anodes are applied in the same cell. These anodes are often formed from carbon and may be cylindrical, flat, e.g. they may be present in square form, but principally, they may have any other desired shape.

Alternatively, a vessel is used which is electrically isolated; electric current is provided via at least one anode and at least one cathode which extend into the electrolyte.
In both alternatives, usually a multitude of anodes is present, and in the latter cell, also a multitude of cathodes.

F₂ formed moves through the molten electrolyte in the form of bubbles to the gas space above the anode compartment, or as gaseous film on parts. H₂ formed moves to the space in the cathode chamber in the form of bubbles. It is well known that F₂ is a very reactive gas, and H₂ and F₂ will react very heavily as soon as they come into contact. This is dangerous and results in loss of product and electrical energy, bringing the current efficiency to a range considerably below 100%. Accordingly, in electrolytic cells for fluorine manufacture, a skirt or comparable means separates the cathode chamber and the anode compartment.

Current cells are designed to provide a compromise between current efficiency and energy efficiency. For energy efficiency, a short distance between the at least one anode and the at least one cathode is desirable. On the other hand, a short distance between anode(s) and cathode(s) may be accompanied by enhanced recombination of H₂ and F₂ to form HF again. This recombination lowers the current efficiency and is also disadvantageous due to the heat formed.

Object of the present invention is to provide electrolytic cells for the manufacture of halogens, especially for the manufacture of F₂, which provide improved energy efficiency and improved current efficiency. Still another object of the present invention is to provide an improved process for the electrolytic manufacture especially of F₂. These objects and other objects are achieved by the invention as outlined in the description and the claims.

The invention concerns an electrolytic cell for the electrolytic manufacture of H₂ and halogens, especially F₂, from a molten electrolyte comprising at least one cathode and at least one anode wherein the at least one cathode and the at least one anode are separated by at least one separating means selected from the group consisting of a diaphragm and a membrane. A diaphragm is preferred.

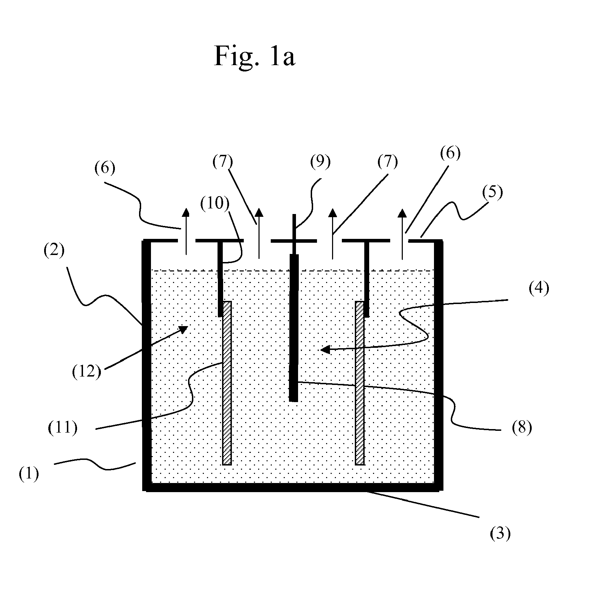

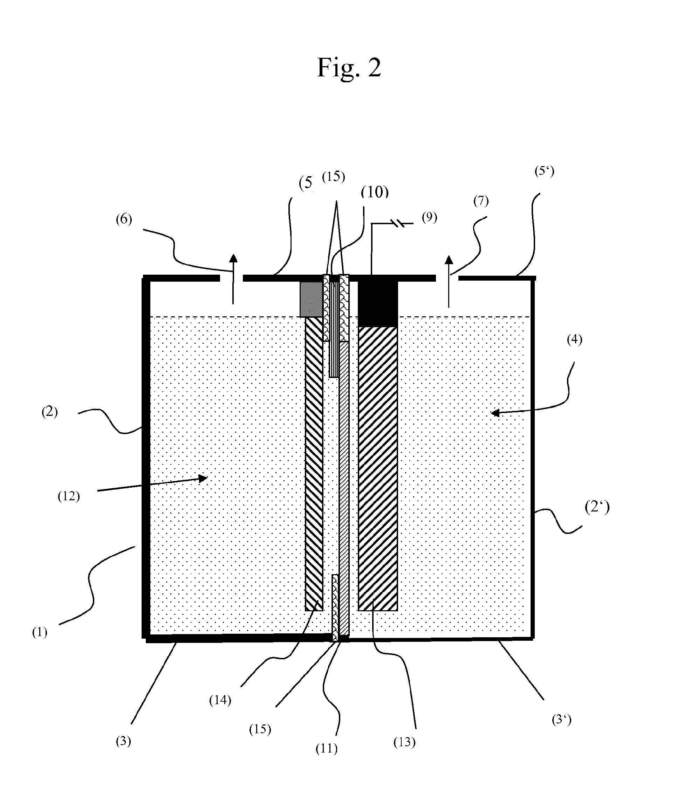

The anode may be of any type of conventionally used in the state of the art in electrolytic cells for the manufacture of halogens, especially for the manufacture of fluorine (F₂), for example, a principle cell of the type as depicted in the Figures 1a to 1d and 2.

### Brief description of the drawings

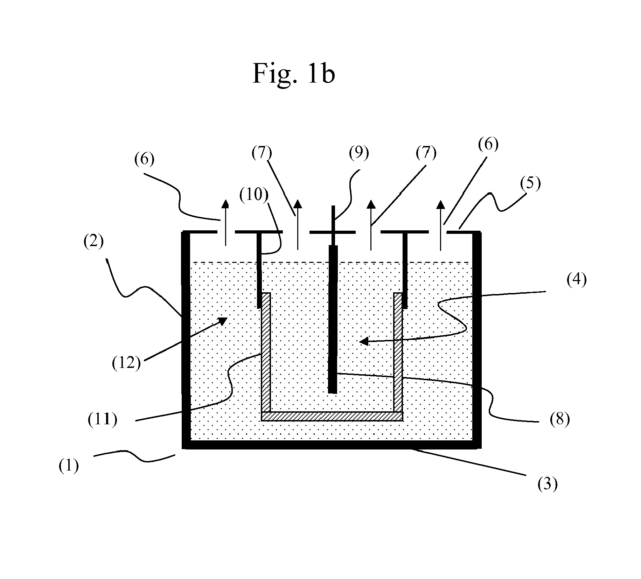

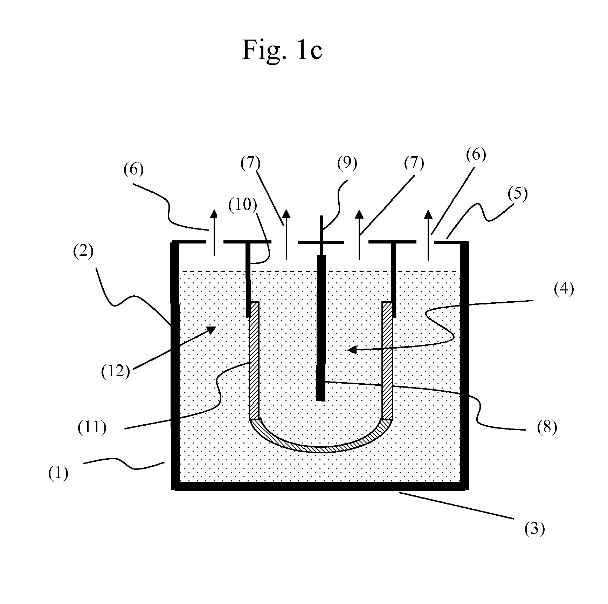

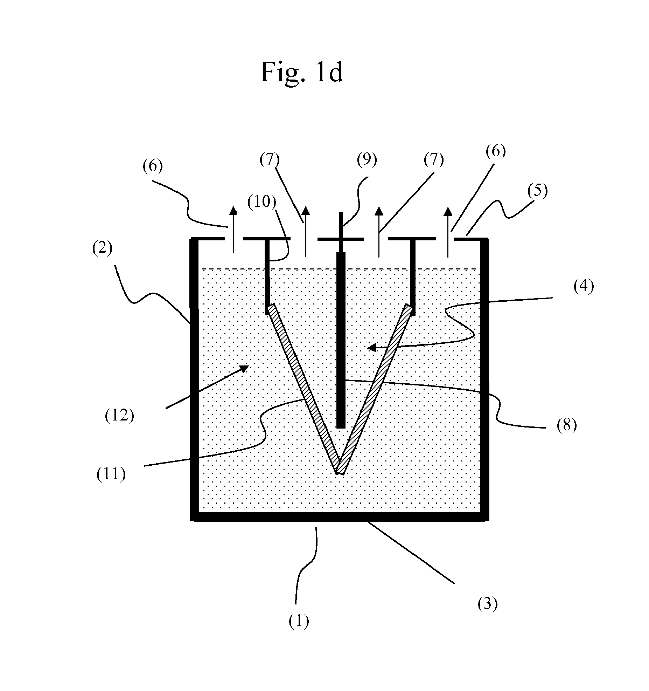

Figure 1 shows a principle electrolytic cell (1) having a diaphragm (11) to separate the cathode compartment (12) from the anode compartment (4). The diaphragm (or is applied a membrane) may be arranged in the cell in manifold arrangements. For example, but without limitation, various layouts are shown in in the Fig. 1a to Fig. 1d as follows: curtain like shape (Fig. 1a); U-shape (Fig. 1b) and Fig. 1c (rounded); V-shape (Fig. 1d); possible fixation or sinker means not shown.
Figure 2 shows a principle electrolytic cell (1) which comprises a diaphragm (11) separating the anode compartment (4) from the cathode compartment (12); a sheet of expanded metal (14), serving as part of the cathode, is arranged in close proximity to the diaphragm (11). The anode (8) can be made from porous carbon and/or may be shutter-like.

### Detailed description of the invention

The term "halogen" denotes preferably F₂ and Cl₂, and especially preferably, F₂. In the following, the invention will be explained in view of the preferred embodiment, a cell suitable for the electrolytic manufacture of F₂.

The term "not electrically conducting" or "electrically non-conducting" denotes items which are made from material which is not conductive for electric current, or which, if the material is conductive for electric current, is not connected to a current source and/or is electrically isolated from any conducting part of the cell. The term "conducting" means that a concerned part of the cell is connected to a current source and that an electric current flows.

The term "cell voltage" denotes the voltage (V) measured in the electrolysis cell in relation to a given anode current density (mA/cm²). The components of the cell voltage that sum up to the total cell voltage are: the reversible decompensation voltage; the anode overvoltage; and the cathode overvoltage; the ohmic potential drop (electrodes); ohmic potential drop (electrolyte), and in addition any overvoltage due to the membrane or diaphragm.

The membrane and the diaphragm are comprising or consisting of materials which are resistant to the electrical and chemical conditions in the electrolysis cell, in particular resistant to the electrolyte, HF, F₂, and H₂, especially at temperatures above 80 °C. The membrane and the diaphragm shall be wettable by the electrolyte.

Thus, a membrane, if applied, is preferably made of any membrane and/or diaphragm suitable polymeric material or their combinations and/or composites therewith which material, even at a temperature of more than 80°C, is resistant to HF, F₂ and H₂. Such suitable materials for the membrane are, for example but not limited to, ion-conductive functionalized fluorinated polymers, especially functionalized poly- or perfluorinated polymers, which are wettable for the electrolyte. Wettability for the electrolyte may be achieved e.g. by modifying the membrane with, but not limited to, nickel oxide (NiO). The membrane may for example be a PTFE (polytetrafluoroethylene) with enhanced wettability for the electrolyte, e.g. a PTFE modified with, but not limited to, nickel oxide (NiO). For other suitable materials reference is made to the materials exemplified for the diaphragm. PVDF (polyvinylidene difluoride) may also be used, but is found suitable only for short-term to mid-term electrolysis.

In a preferred embodiment, the cell contains at least one diaphragm. The diaphragm, if applied, is preferably made of any membrane and/or diaphragm suitable polymeric material or their combinations and/or composites therewith which material, even at a temperature of more than 80°C, is resistant to HF, F₂ and H₂. Such suitable materials for the diaphragm are, for example but not limited to, materials polymeric materials like PTFE (polytetrafluoroethylene), PCTFE (polychlorotrifluoroethylene), ECTFE (ethylene chlorotrifluoroethylene), ETFE (ethylene trifluoroethylene), PFA (perfluoroalkoxy) and FEP (Fluorinated ethylene propylene), all may be made wettable for the electrolyte, e.g. modified with, but not limited to, nickel oxide (NiO). Other suitable materials for the diaphragm are inorganic materials and include, for example but not limited to, alpha-aluminum oxide (alpha-Al₂O₃), zirconium oxides, e.g. zirconium dioxide (ZrO₂), and nickel oxide (NiO).

The sheet metal, e.g. as shown in Fig. 2, serving as a part of the cathode may, for example, be made from carbon steel, iron, nickel, monel metal, stainless steel or even platinum.

Preferably, the cathode compartment (12) of the cell (1) includes a sheet of a gas-permeable and liquid-permeable porous metal, preferably a sheet of expanded metal (14) as the cathode in the cell and/or as part of the cathode compartment. The term "a sheet of porous metal" denotes a metallic item which is installed in the cathode compartment. It may be electrically conducting. It is permeable for gases and the electrolyte due to its porosity. The pores are arranged such that gases may leave the sheet in direction of the gas space in the cathode compartment. For example, the sheet may be a metal plate with holes in it. Preferably, the porous metal is an electrically conducting sheet, made of an expanded metal. Expanded metal comprises ribs rising diagonally upwards such that formed H₂ can leave the expanded metal in direction of the cathode compartment. The advantage of such an electrically conducting sheet, e.g. the sheet which is part of the cathode or forms the cathode, is that the distance between cathode and the anode is shorter - thus more energy effective - without danger that H₂ formed may enter the anode compartment; thus, the cell voltage may be lower due to the shorter distance which saves energy. In such embodiment, if the metal sheet (14) has the function of the cathode, walls, bottom and lid of the cathode cell compartment then may be or may not be electrically conducting. Of course, the skilled person is well aware that electrically conducting parts of the cell may need to be electrically isolated against other parts of the cell. The sheet metal (14) serving as the cathode and/or as a part of the cathode may, for example, be made from carbon steel, iron, nickel, monel metal, stainless steel or even platinum.

An electrolytic cell for the production of F₂ may comprise more than one anode and/or more than one cathode. For example the electrolytic cell may contain, e.g. within a container which serves as the cathode for all the anodes contained in the electrolytic cell, equal to or more than 2 anodes. Preferably, it contains equal to or more than 20 anodes, or even equal to or more than 30 or 40 anodes; for example, 2 - 100 anodes or 20 - 50 anodes, or e.g. 20 - 30 anodes or 40 - 50 anodes. Principally, there is no upper limit for the number of anodes. Thus, the upper limit may be 30 anodes, 60 anodes, 80 anodes or 100 anodes, and even more. In another embodiment it is also possible to arrange in an electrolytic cell for the production of F₂ more than one, especially cylindrically shaped, anode together with more than one cathode, such a cathode is especially shaped cylindrically and is surrounding one of the anodes.

Also it is possible to arrange electrolytic cells in an electrolyzer apparatus for the production of F₂ which may contain more than one electrolytic cell. Preferably, the apparatus contains equal to or more than 5 electrolytic cells. Preferably, it contains equal to or more than 10 cells, or even equal to or more than 15 cells; for example, 2 - 10 cells or 5 - 10 cells, 10 - 20 cells or 15 - 20 cells. Principally, there is no upper limit for the cells provided there is sufficient cooling capacity. Thus, the upper limit may be 40 cells, 60 cells, 80 cells or 100 cells, and even more.

In particular, the membrane or diaphragm of the present invention can also be applied in an electrolytic n electrolytic cell which is designed as a stack cell design.

A general advantage of the electrolyzer cell of the invention, especially in view of its use for the manufacture of F₂ (and H₂) from molten adducts of KF and HF, is that recombination of formed H₂ and F₂ is effectively prevented because essentially no migration of F₂ and H₂ into the non-desired compartment of the electrolytic cell through diaphragm (11) or membrane takes place resulting in, i.a., a current efficiency very close to 100 %, which is higher than observed in known cells, and in a higher safety of the cell. The difference between membrane and diaphragm is that the membrane is ion-conductive and/or selective, and the diaphragm is not. Often, a diaphragm is more stable towards the chemically aggressive contents of the cell.

In one embodiment the membrane or diaphragm may be tightly fixed to the cover lid and/or the skirt and being arranged around the anode the membrane or diaphragm then is hanging down from the cover lid and/or the skirt, preferably expanding top-down in a length equal to or longer than the top-down length of the anode. In this embodiment the membrane or diaphragm is constructed like a curtain wall or shower curtain and placed around the anode. Preferably, means are foreseen to avoid that the membrane or diaphragm does undesirably lift, flutter and/or show other undesired effects. Such means may be any means suitable to stiffen, stretch and/or keep in position the membrane or diaphragm towards the bottom of the electrolytic cell. For example, the lower ends of the membrane or diaphragm may be weighted with balancing weights (which may be of electrically conductive or non-conductive material) or they may be directly or indirectly fixed to the bottom of the electrolytic cell. In such embodiment the membrane or diaphragm may leave the space beneath the anode open towards the electrolyte or the membrane or diaphragm may also surround the down-end of the anode and thus also close the space beneath the anode towards the electrolyte. This latter embodiment is constructed like a plane, envelop or sack around the anode or an anode array in the cell. It is not mandatory that the membrane or diaphragm is parallel to the anode (neither to the cathode). Thus, the membrane or diaphragm may be also arranged to surround the anode, for example but not limited to, in a U-shape or in a V-shape.

In a further embodiment, the membrane or diaphragm may be stiffened, for example, in a corsage type manner or by being wrapped on a frame, grid or cage or the like mounted around the anode, the said stiffening means may be made of electrically conductive or non-conductive material.

In another embodiment the membrane or diaphragm membrane or diaphragm is two-dimensional, especially planar, and extends from one side of the cell to the other and thus separates the anode compartment from the cathode compartment.

The materials suitable for the balancing weights or other means to stiffen, stretch and/or keep in position the membrane or diaphragm may be made of any material resistant to the electrical and chemical conditions in the electrolysis cell, in particular resistant to the electrolyte, HF, F₂, and H₂, especially at temperatures above 80 °C. The material may be electrically conductive or non-conductive. Suitable materials include, for example but not limited to, aluminium oxide, nickel and monel. Furthermore, especially balancing weights are of a material with higher density than the electrolyte.

In the present invention it is preferred to apply a diaphragm in the electrolysis cell.

A membrane is a thin, film-like structure that separates two fluids. It acts as a selective barrier, allowing some particles or chemicals to pass through, but others not. Thus, a membrane is a layer of material which serves as a selective barrier between two phases and is impermeable to specific particles, molecules, or substances when exposed to the action of a driving force. Some components are allowed passage by the membrane whereas others are retained by it. Membranes can be of various thicknesses, with homogeneous or heterogeneous structure. Membrane can also be classified according to their pore diameter. According to IUPAC, there are three different types of pore size classifications: microporous (dp < 2 nm), mesoporous (2 nm < dp < 50 nm) and macroporous (dp > 50 nm). Membranes can be neutral or charged, and particles transport can be active or passive. The latter can be facilitated by pressure, concentration, chemical or electrical gradients of the membrane process.

Membranes can be generally synthetic membranes and can be fabricated from a large number of different materials. It can be made from organic or inorganic materials including solids such as ceramic or polymers. Ceramic membranes are produced from inorganic materials such as aluminium oxides, silicon carbide, nickel oxide, and zirconium oxide. Ceramic membranes are very resistant to the action of aggressive media (acids, strong solvents). They are very stable chemically, thermally, and mechanically inert, which make them usable in high temperature membrane operations, and they usually have long working life. In the context of the present invention reference is made to the suitable membrane materials as mentioned further above. Membranes can be classified based on their surface chemistry, bulk structure, morphology, and production method. The chemical and physical properties of synthetic membranes and separated particles as well as a choice of driving force define a particular membrane process. The most commonly used driving forces of a membrane process in industry are pressure and concentration gradients. The respective membrane process is therefore known as filtration. Synthetic membranes utilized in a separation process can be of different geometry and the respective flow configuration. They can be also categorized based on their application and separation regime.

An example of a membrane is an electricity separator, which is a porous or ion-conductive barrier used to separate anode and cathode in electrochemical systems, such electricity separator is also known as diaphragm. Electricity separators are commonly used in batteries, but hitherto it was not known to use them as a diaphragm in the electrolysis for the manufacture of halogens, especially in the manufacture of fluorine (F₂).

In the present invention a diaphragm (separator) is an ion-permeable separation means placed between an anode and cathode. The main function of diaphragm is to keep the two electrodes apart when arranged closer together to prevent electrical short circuits while also allowing the transport of ionic charge carriers that are needed to close the circuit during the passage of current in an electrochemical cell. An essential function of the diaphragm in the context of the present invention is to prevent the hydrogen gas formed in the cathode compartment to enter into the anode compartment where the fluorine gas is formed, and to prevent the fluorine gas formed in the anode compartment to enter into the cathode compartment where the hydrogen gas is formed.

Thus, the diaphragm is a critical component in the molten-salt electrolytic cells of the present invention. A diaphragm (separator, separation means) generally consists of a membrane and/or diaphragm forming material as mentioned further above as being suitable materials for the diaphragm, which material is manufactured into a (macro-) porous layer. It must be chemically and electrochemically stable with regard to the electrolyte and electrode materials and mechanically strong enough to withstand the high tension during cell construction and operation. The diaphragms or membranes used in the present invention are deemed to confer important advantages to the electrolytic cell because of their structure and properties considerably affect the cell performance, including the cell energy and power densities, lifetime, and safety. Materials for diaphragms include, for example but without limitation, woven and nonwoven HF and F₂ resistant fibers (fabrics) and polymer films. Nonwovens consist of a manufactured sheet, web or matt of directionally or randomly oriented fibers, e.g. forming a nonwoven fabric. Diaphragms and membranes used in the present invention can use a single or multiple layers or sheets of the same or different materials and/or fabrics. For example, but not limited to, the diaphragm (or membrane) of the present invention can be a fabric of a structure known in the art for filtration solutions, for example, a monofilament fabric (e.g. as plain weave, plain reverse dutch weave, twill weave, satin weave); a multifilament fabric or a staple fiber fabric (e.g. each of them as plain weave, twill weave, satin weave, double layer weave); a double layer fabric. The diaphragm (or membrane) of the present invention can also be an open mesh fabric of a structure known in the art for filtration solutions, e.g., a woven synthetic monofilament fabric, in particular a precision woven synthetic monofilament fabric.

In view of the operational conditions known to the skilled person in the manufacture of halogens, especially of fluorine (F2), the essential properties of the diaphragms, as well as of membranes, for the purpose of the present invention include: chemical stability; thickness; porosity; pore size; permeability; mechanical strength; wettability; thermal stability.

The diaphragm (or membrane) material must be wettable but chemically stable against the electrolyte under the strongly reactive environments when electrolytic cell is in full operation, and the diaphragm (or membrane) must not degrade for long-term operation. Stability is assessed by use testing towards resistance to the electrolyte under given conditions. A diaphragm (or membrane) should be preferably thin, e.g. to allow for overall good wettability throughout the diaphragm (or membrane) and to minimize the additional ohmic resistance conferred by the diaphragm (or membrane) and to minimize the additional voltage in the cell, but otherwise it should be thick enough to not compromise mechanical strength and safety. Thickness should support long-term electrolysis. A suitable thickness of the diaphragm (or membrane), in particular if fabrics are used, relates to the fibre material and/or structure of the diaphragm (or membrane), and is for example in the range of from 10 µm to 2000 µm (2 mm). The skilled person is aware that, if desirable for a specific cell, the thickness may be less than 10 µm or greater than 2000 µm (2 mm), if desirable. The thickness of a polymer membrane, or if applicable of a polymer diaphragm, can be measured using a micrometer gauge or according to DIN 53855 part 1 test method (µm) using a long-stroke measuring instrument with digital display. The diaphragm (or membrane) must be strong enough to withstand any tension caused in the operation during cell assembly. Mechanical strength is typically defined in terms of the tensile strength in terms of tear resistance and puncture strength. These parameters are defined in terms of Young's modulus. The diaphragm (or membrane) must remain stable over a wide temperature range without curling or puckering, staying in shape.

The membrane or diaphragm must have sufficient pore density to hold liquid electrolyte, e.g. to have sufficient wettability, thus enabling ions to move between the electrodes. Porosity can be measured using liquid or gas absorption methods according to the American Society for Testing and Materials (ASTM) D-2873. Typically, such a (e.g. polymer) membrane or diaphragm provides porosity of equal or more than 30%, preferably equal or more than 40% or more than 50%, more preferably of equal or more than 60%, and most preferably of equal or more than 70%. For example, the porosity of the membrane or diaphragm in the present invention is in the range of from 30 to 90%, of from 40 to 90%, of from 50 to 90%, of from 60 to 90%, of from 70 to 90%; or in the range of from of from 30 to 80%, 40 or of from 50 % to 80%, of from 60 to 80%, of from 70 to 80%. The pore size of such membrane or diaphragm applied in the present invention preferably is in the range of from 0.1 to 2000 µm (2 cm), preferably in the range of from 1 µm to 200 µm

An important aspect in the context of the present invention is the gas permeability of the diaphragm or membrane, in particular the permeability for hydrogen gas. As mentioned, the diaphragm or membrane serves to separate the cathode and anode compartments and shall withhold any hydrogen gas bubbles formed in the cathode compartment from entering the anode compartment of the electrolysis cell; or to withhold any fluorine gas bubbles formed in the anode compartment from entering the cathode compartment of the electrolysis cell. Especially, this aspect is relevant if for example a diaphragm (or membrane) of fabric type, e.g. woven or nonwoven fabric type, is used in the electrolytic cell. The pores or (fine) holes in the diaphragm in general, but especially if a fabric type diaphragm (or membrane) is used, should have a size that does not allow for any hydrogen gas bubbles formed in the cathode compartment passing through the diaphragm (or membrane) and thereby undesirably entering the anode compartment; or any fluorine gas bubbles formed in the anode compartment from passing through the diaphragm (or membrane) and thereby undesirably entering the cathode compartment. Without willing to be bound by theory it is estimated that the typical bubble size of hydrogen bubbles evolving in electrolysis is in a range of from about 25 µm to about 35 µm diameter. But the skilled person will be aware that hydrogen bubbles with smaller or larger size may eventually occur, too. Furthermore, when deciding on the pore size of the diaphragm (or membrane) to be used in the present invention, the skilled person will also encounter that usually the hydrogen gas bubbles in the electrolysis will not move crosswise but essentially angular to the diaphragm (or membrane) upwards to the gas space of the cathode compartment. Hence, for effectively withholding any hydrogen gas bubbles formed in the cathode compartment from entering the anode compartment, the pore size is not required to be less than the diameter of the hydrogen gas bubbles, but may be even equal to or greater than 25 µm or even equal to or greater than 35 µm. Hence, the pore size of a diaphragm or membrane applied in the present invention, e.g. as a fabric type as mentioned above, preferably is in the range of from 0.1 µm to 2000 µm (2 mm). Preferably, the pore size of a fabric type diaphragm (or membrane) can be in the range of from about 25 µm, more preferably of from 35 µm, to even up to about 2000 µm (2 mm). An example of the pore size for a fabric type diaphragm (or membrane) made of an ECTFE or EFTE fiber material is 70 to 2000 µm (mesh size).

The pore size can also be expressed by means of the parameter "open area [%]" of the diaphragm or membrane applied in the present invention, e.g. as a fabric type as mentioned above. The term "open area [%]" (aₒ [%]) denotes the area percentage of the pores relative to total area, e.g. the square of the sum of the open mesh width (w) and the fiber diameter (d), of the diaphragm or membrane as 100%. Hence, for example, the pore size of the diaphragm or membrane expressed by means of the open area in % can be in the range of from equal or more than 30%, preferably equal or more than 40% or more than 50%, more preferably of equal or more than 60%, and most preferably of equal or more than 70%. For example, the open area of the membrane or diaphragm in the present invention is in the range of from 30 to 75%, of from 40 to 75%, of from 50 to 75%, of from 60 to 75%, of from 70 to 75%. This characterization of the pore size by the parameter of open area [%] is especially meaningful for a diaphragm or membrane made of open mesh fabrics, e.g. of (precision) woven synthetic monofilament fabrics. For determining the open area [%] the mesh opening (w) and the diameter (d) of the fiber can be measured by an electronic image analysis system, wherein the measured data are arithmetic means.

The pore size can also be expressed by means of the parameter "air permeability [l/m²/s]" of the diaphragm or membrane, especially of those made of fabrics. The parameter "air permeability" indicates how easily a gas, e.g. air, can pass the diaphragm or membrane against a defined pressure, which for measuring the air permeability is typically set at 20 mm WC (Water Column). Hence, for example, the pore size of the diaphragm or membrane expressed by means of the air permeability can be in the range of from equal or less than 4500 l/m²/s, preferably equal or less than 3000 l/m²/s, more preferably of equal or less than 2000 l/m²/s, more preferably of equal or less than 1500 l/m²/s, and most preferably of equal or less than 500 l/m²/s. For example, the air permeability of the diaphragm or membrane in the present invention is in the range of from 30 to 4500 I/m²/s, of from 100 to 4500 l/m²/s, of from 150 to 4500 l/m²/s, of from 30 to 3000 l/m²/s, of from 100 to 3000 l/m²/s, of from 150 to 3000 l/m²/s, of from 30 to 2000 l/m²/s, of from 100 to 2000 l/m²/s, of from 150 to 2000 l/m²/s, of from 30 to 1500 l/m²/s, of from 100 to 1500 l/m²/s, of from 150 to 1500 l/m²/s, of from 30 to 1000 l/m²/s, of from 100 to 1000 l/m²/s, of from 150 to 1000 l/m²/s, of from 30 to 500 l/m²/s, of from 100 to 500 l/m²/s, of from 150 to 500 l/m²/s. This characterization of the pore size by the parameter "air permeability" is especially meaningful for a diaphragm (or membrane) of the present invention made of a fabric, especially those of a structure like, for example, a monofilament fabric (e.g. as plain weave, plain reverse dutch weave, twill weave, satin weave); a multifilament fabric or a staple fiber fabric (e.g. each of them as plain weave, twill weave, satin weave, double layer weave); or a double layer fabric. Practical, but not limiting, examples of the most preferred ranges are air permeabilities of 165 l/m²/s and 260 l/m²/s for monofilament fabrics made of ECTFE (twill weave), and 480 l/m²/s for double layer weave fabrics made of ECTFE.

The diaphragm (or membrane) should not essentially limit performance. Thus, the electrolyte should be able to permanently wet the diaphragm (or membrane) with electrolyte, preserving the functioning of the electrolysis. Poor electrolyte wettability of the diaphragm or membrane can lead to substantial overvoltage in the cell. It is to be noted that the molten electrolyte is essentially free of water. Therefore, membrane materials which comprise any free water in its pores required for its proper functioning are not suitable in the electrolysis of the present invention, e.g. the membrane materials suitable for the present invention do not require any free water in its pores for its proper functioning. There is no generally accepted method used to test wettability, other than observation. However, diaphragms or membranes typically increase the resistance of the electrolyte, e.g. the diaphragm or membrane contributes with some additional voltage (overvoltage), e.g. depending on the material for the diaphragm or membrane, to the total cell voltage compared to the cell voltage without diaphragm or membrane at a given current density. For example, ETFE leads to an overvoltage of about 0.5 V at a current density of 80 mA/cm² and ECTFE leads to an overvoltage of about 0.13 V at a current density of 80 mA/cm². It must be reminded that this overvoltage is by far outbalanced by the lower cell voltage possible in electrolysis cells due to the substantially shortened distance between the cathode and anode if a diaphragm or membrane is applied. The overvoltage of a respective diaphragm or membrane can be determined by measuring the voltage drop by means of two reference electrodes with Haber-Luggin-capillaries placed at the two opposite sides of the diaphragm or membrane.

Some principle embodiments of an electrolysis cell of the invention with a membrane or diaphragm are shown in Figures 1a to 1d. The apparatus is based on cells which are often used for the electrolytic manufacture of F2. In this embodiment of the invention, cell (1) comprises an electrically conducting wall (2) and a bottom (3)., an anode compartment (4), a lid (5) with at least one line (6) for the withdrawal of H₂ formed and at least one line (7) for the withdrawal of halogen - preferably F₂ - formed ; at least one anode (8) which may be made of carbon, extending into the electrolyte in the anode compartment (4); a current supply line (9) for the anode (8); at least one skirt (10) to separate the gas spaces of the compartments; at least one diaphragm (11); and at least one cathode compartment (12). The at least one diaphragm (11) separates the cathode compartment (12) and the anode compartment (4). For simplification of the drawing, one single anode (8) is shown. The electrolyte in the cell (1) is indicated by dots.

According to an alternative embodiment, the cell of Figures 1a to 1d, and 2 may, instead of diaphragm (11), comprise a membrane to separate the compartments.

Compared to known electrolytic cells, the cell according to Figures 1a to 1d and 2, containing a diaphragm (11) or a membrane, allows a safe separation of the formed gases F₂ and H₂. Thus, practically no recombination occurs, and the current efficiency is improved. Further advantage is that the anode may be arranged much nearer to the cathode forming parts. For example, compared to a cell of the state of the art the distance between the anode and the cathode, in the cell of the invention, can be reduced to 3 cm or even less. A short distance allows for a lower cell voltage to be applied, e.g. starting from 3 V, depending on the particular cell design and e.g. process parameters applied, e.g. electrolyte composition, amperage, temperature, and anode and cathode materials. This improves energy efficiency. The cell voltage can be equal to or lower than 9 V, and can be even equal to or lower than 8 V. Practically, the cell voltage is equal to or higher than 5 V, especially equal to or higher than 6 V, e.g. at current densities of about 80 mA/cm². Preferably, the applied voltage is in the range from about 5 to 9 V. Often, it is equal to or lower than about 8.5 V. Thus, the cell voltage may be in the range of 5-9 V, 6-9 V, 5-8 V, 6-8 V, 5-7 V or 6-7 V, 5-6 V, or any other according cell voltage range deemed suitable by the skilled artisan. Contrary thereto, in cells according to the state of the art, the cell voltage applied is often in the range of from 9 to 11V. For typical current density in the cell is 80 mA/cm², and a distance of about 2 cm, e.g. the operating voltage is about 6.6 to 6.7 V, and thus allowing for energy savings of about 30 %. In another example, even at a double current density of 160 mA/cm², and a distance of about 2 cm, although then operating voltage is about 9 V resulting in a doubling of the F₂ productivity at the lower end of the voltage range in a conventional cell. The skilled person is aware that a voltage of higher than 9 V is possible, but likely with need of leading away thermic energy. For example, the voltage can be easily up to 20 V at increased current densities.

Another effective electrolytic cell is shown in Figure 2. The cell (1) comprises a wall (2), a bottom (3), a lid (5), forming the cathode compartment (12); a wall (2'), a bottom (3'), a lid (5') which may be conducing or non-conducting, forming the anode compartment (4), lines for the withdrawal of H₂ (6) and F₂ (7), and a diaphragm (11) - or alternatively, a membrane - between cathode compartment (12) and anode compartment (4). The cathode compartment (12) contains an electrically conducting porous metal, e.g. an expanded metal sheet (14) arranged in parallel and close to the diaphragm (11). The expanded metal (14) serves as part of the cathode. An alternative material is a porous metal sheet or any other metal permeable for gas and electrolyte. The interior space (4) of the cell (1) is filled with electrolyte, indicated by dots. Thus, a part of the conducting surfaces in the cathode compartment is in close proximity to the anode; this improves energy efficiency. The anode (13) can be a porous or shutter-shaped carbon electrode and is connected to a current line (9). The anode (13) is also in close proximity to the electrically conducting sheet (14) of the cathode compartment with the membrane or diaphragm (11) in between. Once again, this improves the energy efficiency because the anode and the cathode parts can be arranged much closer than in cells of the state of the art. The Diaphragm (11) - or, if applied, a membrane - prevents recombination of F₂ and H₂ produced by the electrolysis. The term "close proximity" means the distance can be as close as starting from e.g. 0.01 cm as a minimum distance according to the thickness of the diaphragm or membrane, and preferably means a distance of up to equal to or less than 10 cm, especially equal to or less than 5 cm, more preferably of equal to or less than 3 cm, and most preferably of equal to or less than 2 cm, e.g. a distance in the most preferred range of from 0.01 to 2 cm. The very short distance between the expanded metal (14) of the anode compartment, serving as anode, and the electrically conducting sheet metal (14) as part of the cathode vessel makes this cell more effective in energy consumption while providing a safe F₂ production. In an alternative embodiment, the diaphragm (11) could be substituted by a membrane to provide a cell with comparable advantages.

It has to be noted that in Figures 1a to 1d wherein the cathode is formed by wall and bottom, instead thereof or in addition a separate cathode can be introduced into the cell immersing into the electrolyte as shown in Figure 2..

The electrolytic cell may be part of a plant for the manufacture of F₂ used for etching or as chamber cleaning gas in the manufacture of semiconductors, TFTs, photovoltaic cells or in the manufacture of micro-electromechanical systems.

Such a plant constructed according to the skid concept is described in WO 2012/034978.

In such a plant according to the skid concept as described in WO 2012/034978, the F₂ generating cell of the present invention is incorporated in skid 2.

Skid 2 comprising the electrolytic cell or cells contains at least one electrolytic cell. Preferably, it contains at least two electrolytic cells. A multitude of several cells may be combined and arranged into a stack. More preferably, it contains at least 6 electrolytic cells or a stack of these. A skid 2 with 8 electrolytic cells or a stack of these is very suitable. At least one, preferably each of the cells, optionally in a stack, comprises a membrane or preferably diaphragm according to the invention. The skid preferably is constructed such that if desired, additional electrolytic cells or cell stacks can be added if the demand for fluorine gas is rising. The cells or cell stacks comprise jackets or cooling plates or the like through which cooling water or heating water can be circulated. If desired, skid 2 can be provided in the form of separate sub-skids 2A, 2B and so on. In these sub-skids, a certain number of electrolytic cells or cell stacks are assembled. The separate sub-skids 2A and 2B (and any other sub-skids) are attached together to form one cell room or cell stack room. Often, the cell room will contain 4, 6 or more cells or stacks, for example, 8 cells or stacks or even more. The advantage of providing several electrolytic cells or stacks is that the shut-off of one or even more cells or stacks for maintenance or repair can be compensated by raising the output of the other cells or stacks. To assemble several sub-skids has the advantage that dimensions can be kept within permissible maximum dimensions for usual road transport. The electrolytic cells or stacks are connected to collectors for the F₂ and the H₂ produced. Skid 2 comprises at least one rectifier to supply DC current to the cell anodes. It has to be noted that each cell may comprise 1 or more anodes. Typically, each cell or stack comprises 20 to 30 anodes. A cable connects each of the anodes with the rectifier. Each cell cathode is connected through one copper cable or aluminum bus bar to the rectifier. One rectifier can supply current to one or more cells or stacks. It is preferred to apply one rectifier per anode. The advantage is that the intensity at each individual anode can be tuned depending on the specific anode characteristics, abnormal situations at a specific anode (e.g. overvoltage, short-circuit, or broken anode) can be immediately detected allowing the automatic shutdown of the faulty anode while all other anodes and cells continue to produce F₂.

Skid 2 includes a water circuit supplying cooling or heating water to the jackets or cooling plates or the like of the cells or stacks.

The invention also provides a method for the manufacture of H₂ and Hal₂ wherein Hal denotes Cl₂ or F₂, preferably F₂. According to this method, an electrolyte is filled into an electrolytic cell, the electrolyte is molten and electric current is passed through the electrolyte via the at least one cathode and the at least one anode, wherein an electrolytic cell is provided comprising at least one cathode and at least one anode wherein the at least one cathode and the at least one anode are separated by at least one separating means selected from the group consisting of a diaphragm or a membrane. Formed H₂ and Hal₂ are collected in the cathode compartment and the anode compartment, respectively, and are withdrawn from the respective compartment.

Thus, the invention provides a method for the manufacture of H₂ and Hal₂ wherein Hal₂ denotes Cl₂ or F₂, preferably F₂, comprising a step of providing a cell for the electrolytic manufacture of H₂ and halogens from a molten electrolyte comprising at least one cathode and at least one anode wherein the at least one cathode and the at least one anode are separated by at least one separating means selected from a diaphragm or a membrane, providing a molten electrolyte, passing electric current through the cell and withdrawing formed H₂ and Hal₂ from the cell. Preferably, the cell comprises at least one diaphragm (11) separating the cathode compartment and the anode compartment.

The manufacture of H₂ and F₂ electrolytically from molten adducts of KF and HF is preferred, especially preferably by electrolysis of KF·(1.8-2.3)HF.

Preferably, the method of the invention is performed in cell as described in Figures 1a to 1d or 2.

Preferably, the distance between the cathode and the anode (8) is equal to or lower than 5 cm, preferably equal to or lower than 3 cm, and even equal to or lower than 2 cm. The distance can be as low as the diaphragm or membrane thickness, e.g. as low as 0.01 cm.

Preferably, the electrolysis is performed in a cell which comprises an electrically conducting porous metal or electrically conducting extended metal sheet (14) serving as part of the cathode or as cathode. Preferably, the distance between the anode (8) and the electrically conducting porous metal or electrically conducting extended metal sheet (14) serving as part of the cathode or as cathode is equal to or less than 3 cm. Preferably the distance can be as low as the diaphragm or membrane thickness, e.g. as low as 0.01 cm.

Should the disclosure of any patents, patent applications, and publications which are incorporated herein by reference conflict with the description of the present application to the extent that it may render a term unclear, the present description shall take precedence.

The following example is intended to explain the method of the invention in detail without intending to limit the scope of the invention.

### Example 1: Production of F₂ in a test cell

A test cell for the production of F₂ and H₂ from a molten electrolyte having a composition of approximately KF·2HF was provided. The cathode was an expanded metal sheet made from carbon steel.

The anode was a porous carbon electrode. A diaphragm made from ETFE or the like polymers as indicated in the descriptive body of this application, separated the cathode compartment and the anode compartment. The anode was adjacent to the diaphragm and the cathode. The distance between anode and the cathode was approximately 2 cm.

Liquid KF·2HF electrolyte was filled into the cathode compartment, and the temperature was adjusted to keep the electrolyte molten (approximately in a range to about 77 °C to 88 °C).

Voltage of 6 to 8 V was applied at a current density of about 20 to 80 mA/cm², and 9 V was applied at a current density of about 160 mA/cm², and H₂ formed in the cathode compartment, and F₂ formed in the anode compartment. The H₂ formed passed through the molten electrolyte into the gas space above the electrolyte in the cathode compartment and was withdrawn through a line.

The F₂ formed was withdrawn from the anode compartment and analyzed. The content of HF was 6 to 10 %.

The use of a membrane or diaphragm between cathode and anode will require the application of a specific additional voltage due to the ohmic resistance of the membrane or diaphragm material. Thus, the additional voltage of the membrane or diaphragm, which can be measured directly at the membrane or diaphragm by means of two Luggin capillaries, e.g. those familiar to the electrochemically skilled person, placed at the two opposite sides of the membrane or diaphragm and each of them connected to a separate reference electrode, e.g. to a hydrogen reference electrode. For example ETFE will lead to an additional voltage of 0.5 V and ECTFE to an additional voltage of 0.13, both measured at a current density of 80 mA/cm². However, this additional voltage will due to the possible closer distance of the cathode and the anode, e.g. resulting in a lower cell voltage of 6 - 8 V as compared to the normal distance of the cathode and anode in a cell without membrane or diaphragm and a cell voltage of 9 - 11 V.

### Reference list:

(1) Electrolytic cell
(2) Wall of cathode compartment
(2') Wall of cathode compartment
(3) Bottom of electrolysis cell; in Fig. 2 bottom of cathode compartment
(3') Bottom of anode compartment
(4) Anode compartment
(5) Cover lid
(5') Cover lid of anode compartment
(6) H₂ line
(7) F₂ line
(8) Anode
(9) Current line for anode
(10) Skirt
(11) Diaphragm
(12) Cathode compartment
(13) Porous or shutter-shaped carbon anode
(14) Expanded metal sheet, e.g. porous or expanded metal cathode
(15) Electrically isolating material, e.g. a material which is resistant to H₂ and F₂, e.g. a material selected from PTFE (polytetrafluoroethylene), PFA (perfluoroalkkoxy), FEP (fluorinated ethylene-propylene), PCTFE (polychlorotrifluorethylene), ECTFE (ethylene chlorotrifluorethylene), FKM (FPM by ISO) which are fluoroelastomers as defined in ASTM D1418, other fluorinated elastomers such as perfluoro-elastomers (FFKM) and tetrafluoro ethylene/propylene rubbers (FEPM); examples of FKMs are Tecnoflon® (Solvay), Viton® (DuPont), and of FFKM (FEPM) e.g. Kalrez® (DuPont). The electrolyte, in the drawings, is indicated by dots.

## Claims

**1.** A cell for the electrolytic manufacture of H₂ and halogens from a molten electrolyte comprising at least one cathode and at least one anode wherein the at least one cathode and the at least one anode are separated by at least one separating means selected from a diaphragm or a membrane.

**2.** The cell of claim 1 wherein the cell (1) comprises a wall (2) and a bottom (3), an anode compartment (4), a cover lid (5) with at least one line (6) for withdrawing H₂ formed and at least one line (7) for withdrawing halogen formed; an anode (8) extending into the interior space (4) of cell (1); a current supply line (9) for the anode (8); at least one skirt (10) and at least one membrane or diaphragm (11); at least one cathode compartment (12); wherein the at least one membrane or diaphragm (11) separates the cathode compartment (12) and the anode compartment (4).

**3.** The cell of claim 1 or 2 wherein at least the cell wall (2) and/or optionally at least one expanded metal (14) constitute the cathode.

**4.** The cell of anyone claims 1 to 3 comprising an electrically conducting porous metal or electrically conducting extended metal sheet (14) serving as part of the cathode or as cathode, and which is arranged parallel to the anode and separated from the anode by the least one separating means selected from diaphragm (11) or membrane.

**5.** The cell of any one of claims 1 to 4 wherein the at least one diaphragm (11) is made of a material comprising or consisting of polymeric materials selected from the group consisting of PTFE (polytetrafluoroethylene), PCTFE (polychlorotrifluoroethylene), ECTFE (ethylene chlorotrifluoroethylene), ETFE (ethylene trifluoroethylene), PFA (perfluoroalkoxy) and FEP (Fluorinated ethylene propylene), preferably with enhanced wettability for the electrolyte, and/or of inorganic materials selected from the group consisting of alpha-aluminum oxide (alpha-Al₂O₃), zirconium oxides, in particular zirconium dioxide (ZrO₂), and nickel oxide (NiO).

**6.** The cell of anyone of claims 1 to 5 wherein the distance between the wall (2) of the cathode compartment and the anode (8) is equal to or lower than 5 cm, preferably equal to or lower than 3 cm, more preferably equal to or lower than 2 cm.

**7.** The cell of claim 4 wherein the distance between the anode (8) and the electrically conducting porous metal or electrically conducting extended metal sheet (14) serving as part of the cathode or as cathode is equal to or lower than 5 cm, preferably equal to or less than 3 cm, more preferably equal to or lower than 2 cm.

**8.** A method for the manufacture of H₂ and Hal₂ wherein Hal denotes Cl₂ or F₂, preferably F₂, comprising a step of providing a cell for the electrolytic manufacture of H₂ and halogens from a molten electrolyte comprising at least one cathode and at least one anode wherein the at least one cathode and the at least one anode are separated by at least one separating means selected from a diaphragm or a membrane, providing a molten electrolyte, passing electric current through the cell and withdrawing formed H₂ and Hal₂ from the cell.

**9.** The method of claim 8 for the manufacture of F₂ wherein the electrolysis is performed at a cell voltage is equal or higher than 3 V, preferably in the range of from 3 to 20 V, more preferably in the range of from 5 to 9 V, even more preferably in the range of from 6 to 9 V.

**10.** The method of claim 9 wherein the electrolysis is performed at a voltage in the range of from 5 to 8 V, preferably 6 to 8 V.

**12.** Use of a membrane or a diaphragm in an electrolytic cell for the manufacture of H₂ and Hal₂ wherein Hal denotes Cl₂ or F₂, preferably F₂, from a molten electrolyte in the cell comprising at least one cathode and at least one anode wherein the at least one cathode and the at least one anode are separated by at least one separating means selected from a membrane or a diaphragm.

**13.** The cell of any one of claims 1 to 8 wherein the at least one membrane or diaphragm is arranged parallel to the anode, is arranged as a plane, envelop or sack to surround the anode, is arranged as a U-shape to surround the anode, or is arranged as a V-shape to surround the anode.
